Europäisches Patentamt

European Patent Office

Office européen des brevets

(11) Numéro de publication: **0 273 826**
**A1**

## (12) DEMANDE DE BREVET EUROPEEN

(21) Numéro de dépôt: **87402932.5**

(22) Date de dépôt: **21.12.87**

(51) Int. Cl.⁴: **G 05 B 19/42**

(30) Priorité: **23.12.86 FR 8618069**

(43) Date de publication de la demande:
**06.07.88 Bulletin 88/27**

(84) Etats contractants désignés: **DE FR GB IT**

(71) Demandeur: **Le Cren, Roger**
**5 Avenue de Joinville**
**F-94130 Nogent sur Marne (FR)**

**Cauwet, Claude**
**46 rue de l'Ancienne Mairie**
**F-92100 Boulogne Billancourt (FR)**

(72) Inventeur: **Cauwet, Claude**
**46 rue de l'Ancienne Mairie**
**F-92100 Boulogne Billancourt (FR)**

(54) **Perfectionnements aux procédés de gravure automatique.**

(57) Le procédé fait appel à une caméra-vidéo (10), un ordinateur programmé (12 à 54) et une machine-outil (56) à commande numérique à trois axes de déplacement. Des transitions particulières des niveaux de gris du signal de sortie numérisé de la caméra sont recherchées (18). Deux signaux binaires contigus ainsi produits définissent un segment primitif d'une ligne à graver. Les paramètres directeurs des segments de ligne normalisés en accord avec le pas de déplacement de la machine (56) sont produits et les suites des signaux numériques de commande de déplacement horizontal de la machine sont déduites (40-42). Les signaux de commande de profondeur de gravure sont renouvelés à chaque nouvelle passe de gravure.

Application à la fabrication de bijoux et de mots-objets, à la demande du client.

FIG. 1

FIG. 2

## Description

PERFECTIONNEMENTS AUX PROCEDES DE GRAVURE AUTOMATIQUE

L'invention concerne des perfectionnements aux procédés de gravure et/ou de découpe automatique de petits objets d'ornement ou d'usage.

Les procédés connus de gravure automatique les plus récents mettent en oeuvre une machine-outil à commande numérique à trois axes de déplacement. A cet effet, la machine est équipée d'un outil de gravure fine, choisi en fonction du matériau de l'ébauche à graver. Sur cette machine, les moteurs de commande des déplacements relatifs de l'ébauche et de l'outil appartiennent à l'un des deux types suivants : moteurs pas à pas (commandes en boucles ouvertes) et moteurs à courant continu associés à des capteurs optiques de déplacement (commandes en boucles fermées). Dans les deux cas, les signaux numériques de commande de ces machines sont des impulsions de fréquence déterminée, chaque impulsion étant adaptée à faire déplacer d'un pas l'ébauche ou l'outil, suivant les axes horizontaux X et Y et suivant l'axe vertical Z. Le pas de déplacement élémentaire de l'ébauche et/ou de l'outil des machines-outils de précision utilisées en gravure automatique, est en général au plus égal à un centième de millimètre.

En dehors des postes de conception assistée par ordinateur, les moyens généralement utilisés pour produire de tels signaux numériques, font appel à une table à numériser associée à un ordinateur. Avec un tel équipement, l'opérateur peut, à l'aide d'une pointe à dessiner reliée à la table, en suivant les traits du modèle à reproduire, convertir ces traits en signaux numériques représentatifs des déplacements horizontaux de l'ébauche à graver puis stocker ces signaux dans la mémoire de l'ordinateur. De tels moyens conviennent tout-à-fait pour la gravure automatique d'objets devant comporter des graphismes relativement simples. Dans le cas de modèles plus complexes (les traits d'un visage par exemple), l'opérateur devra en plus posséder des talents confirmés de dessinateur d'art afin d'être en mesure tout d'abord de réaliser le modèle, puis d'en suivre fidèlement les traits avec la pointe à dessiner. La qualité de la gravure réalisée dépendra davantage des talents de l'opérateur que de tout autre chose. Un tel préalable constitue à l'évidence un frein considérable à l'utilisation de ce procédé de gravure automatique pour la réalisation d'objets comportant la représentation fidèle d'un sujet particulier.

Pour faire face à cette difficulté particulière, un procédé de gravure automatique décrit dans le brevet américain n° 4.385.360 accordé en 1983 à Yamada et al, propose de réaliser une saisie automatique des données afférentes à l'image du sujet à reproduire et, à cet effet, d'utiliser une caméra vidéo associée à un convertisseur analogique-numérique. Ce procédé est toutefois limité en ce sens qu'il ne permet pas de fabriquer des objets d'une qualité comparable à celle de ceux obtenus par la mise en oeuvre du procédé procédemment présenté. En effet, dans le procédé du brevet cité, la gravure se fait au moyen d'une fraise à tête conique large et a pour objet de réaliser en creux dans une ébauche en plastique généralement transparent, une quantité limitée de points de diamètre variable en fonction des niveaux de gris des points correspondants de l'image du sujet présenté à la caméra. Ce qui aboutit à un résultat esthétique médiocre bien que relativement fidèle. Au contraire, avec le procédé de gravure automatique utilisant une table à numériser, il est possible, pour un opérateur habile, d'effectuer une bonne saisie manuelle de données permettant ensuite de graver des traits continus reproduisant fidèlement les lignes distinctives des contours et des contrastes de l'image du sujet à représenter. Et cela, sur un support plan quelconque, opaque ou transparent.

L'objet de l'invention, concerne un procédé de gravure automatique nouveau permettant à la fois de pallier les inconvénients propres aux deux procédés connus rappelés ci-dessus et de conserver les avantages de chacun d'eux.

L'objet de l'invention concerne plus précisément des perfectionnements aux procédés connus de gravure automatique, permettant de fabriquer à l'unité, à coût modéré et sans faire appel à des talents particuliers, de petits objets d'ornement ou d'usage comportant la représentation fidèle des traits distinctifs (lignes de contours et/ou de contrastes) d'un sujet quelconque.

Selon l'invention, un procédé de gravure automatique de petits objets devant comporter la représentation fidèle des traits distinctifs d'un sujet déterminé, du genre dans lequel l'image du sujet concerné étant analysée par balayages, des séries primaires de signaux numériques, représentatives des lignes de pixels analysées, sont produites et mémorisées, puis traitées de façon à produire des séries secondaires de signaux représentatives de l'image à graver, lesdites séries secondaires, étant ensuite traitées à leur tour de façon à produire des suites de signaux numériques de commande des déplacements relatifs d'une ébauche et d'un outil de gravure montés sur une machine-outil de précision à commande numérique, du type à trois axes de déplacement, est caractérisé en ce que les signaux composant lesdites séries secondaires sont des signaux binaires correspondant à des transitions particulières des niveaux de gris desdites séries primaires, deux signaux binaires adjacents définissant un segment primitif d'une ligne distinctive à graver, et en ce que ledit outil étant adapté à graver des traits fins, lesdites suites de signaux numériques de commande de déplacements relatifs de ladite ébauche et dudit outil, comprennent d'une part, des doubles suites continues, le cas échéant renouvelées, d'impulsions de commande de déplacements horizontaux élémentaires, longitudinaux et/ou transversaux, chaque double suite continue correspondant à la succession des segments primitifs d'une ligne distinctive à graver et, d'autre part, une suite discontinue d'impulsions de commande de déplacements verticaux élémentaires déterminant la profondeur de gravure, le cas échéant renouvelée à l'occasion de chaque nouvelle passe de gravure d'une ligne, jusqu'à progressivement réaliser une découpe dans la dite ébauche.

Dans un tel procédé, les séries primaires de signaux numériques seront produites au moyen d'un appareil de saisie numérique d'image, tel qu'un lecteur optique à balayages ou une caméra-vidéo associée à un dispositif de numérisation d'image. Quant à l'outil à utiliser, il sera d'un type (fraise, burin graveur, émetteur laser, pointe à électro-érosion...), adapté au matériau de l'ébauche (métal précieux ou non, bois, nacre, plastique...), cette ébauche étant plane.

Grâce à ce procédé, tout opérateur de machine-outil à commande numérique trois axes peut, sans posséder le moindre talent de dessinateur d'art, réaliser sur le champ, à la demande et à des conditions économiques intéressantes, des petits objets d'ornement ou d'usage gravés et/ou découpés, comportant la représentation fidèle des traits distinctifs de tout sujet proposé par un client. Un tel sujet sera par exemple, le visage d'une personne ou sa photographie et plus généralement tout dessin, peinture ou photographie présentant des contrastes. Quant aux objets concernés par l'invention, ils comprennent notamment des objets d'ornement ou d'usage, et par ordre de dimensions croissantes, des boucles d'oreilles (environ un centimètre carré), des broches, des médailles, des porte-clefs, des presse-papiers, des ustensiles de table gravés, des inscriptions en relief et des plaquettes commémoratives (jusqu'à deux ou trois décimètres carrés).

Selon une étape annexe caractéristique du procédé selon l'invention, ladite représentation étant constituée par un assemblage d'éléments figuratifs choisis dans un ensemble déterminé, des séries secondaires élémentaires, représentatives de chacun des contours des éléments dudit ensemble, sont produites et mémorisées puis sélectionnées et assemblées de manière à constituer des séries secondaires combinées, représentatives des contours présentés par ledit assemblage d'éléments figuratifs choisis.

Grâce à cette étape annexe du procédé selon l'invention, il est aisé de fabriquer, à la demande et à des conditions économiques intéressantes, un assemblage quelconque de lettres, de signes et/ou de symboles, liés ensemble pour former un objet découpé constituant par exemple un mot.

Selon une autre étape annexe caractéristique du procédé selon l'invention, l'ébauche présentant une surface courbe, des séries complémentaires de signaux représentatives des coordonnées tridimentionnelles de points de ladite surface courbe sont produites en accord avec la résolution des segments primitifs de lignes à graver, puis mémorisées et les données de niveaux desdites séries complémentaires de signaux sont ensuite appelées en accord avec la succession des signaux des séries secondaires de signaux afférentes à la représentation concernée, de manière à produire des suites continues, le cas échéant renouvelées, d'impulsions de niveaux pour la commande des déplacements relatifs verticaux de l'ébauche et de l'outil, destinés à être ajoutées à la suite discontinue des impulsions de commande de profondeur de gravure.

Grâce à ce procédé de gravure automatique perfectionné, il devient possible à des conditions économiques intéressantes, de graver sur les manches bombés d'ustensiles de table d'un modèle donné, toute inscription (marque, prénom, monogramme) ou représentation (blason, symbole) demandée par le client.

Les caractéristiques et avantages de l'invention apparaîtront d'une manière plus précise à la suite de la description ci-après d'une forme particulière de réalisation de l'invention, faite en référence aux dessins annexés dans lesquels:

- la figure 1 représente le schéma des étages fonctionnels de la première étape principale du procédé de gravure selon l'invention ;
- la figure 2 représente le schéma des étages fonctionnels de la seconde étape priciple du procédé de gravure selon l'invention ;
- la figure 3 représente une variante de certaines étages fonctionnels de la figure 2 ;
- la figure 4 représente en A, B et C trois médailles réalisées suivant le procédé de gravure de la figure 2 ;
- la figure 5 représente les étages fonctionnels d'une étape annexe du procédé de gravure selon l'invention ;
- la figure 6 représente en A et B deux exemples d'objets réalisés en utilisant les étages fonctionnels des figures 1, 2 et 5 ;
- la figure 7 représente les étages fonctionnels d'une autre étape annexe du procédé de gravure selon l'invention.

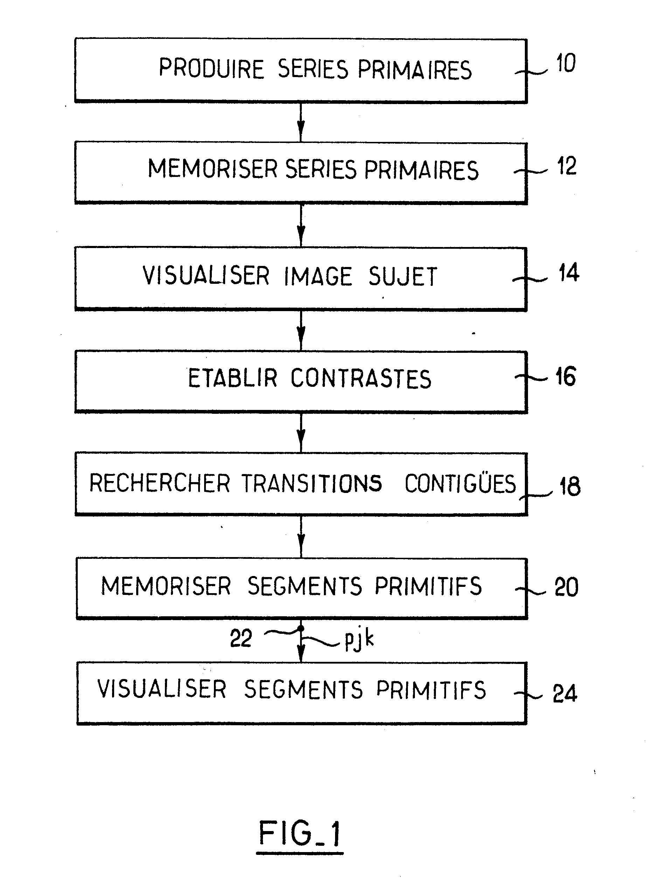

Selon la figure 1, la première étape du procédé de gravure automatique selon l'invention comprend, dans son expression la plus générale, la suite des étages fonctionnels suivants : en 10, "Produire des Séries Primaires" de signaux numériques, représentatives des pixels de l'image du sujet concerné, en 12 "Mémoriser ces Séries Primaires" ; en 14 "Visualiser Image Sujet", en 16 "Etablir Contrastes", en 18 "Rechercher Transitions Contigües" et en 20 "Mémoriser Segments Primitifs", l'étage 20 délivrant sur sa sortie 22 les coordonnées (xjk, yjk) des j pixels primitifs pjk visualisées en 24, constituant en pointillés chacune des k lignes distinctives de l'image du sujet à graver.

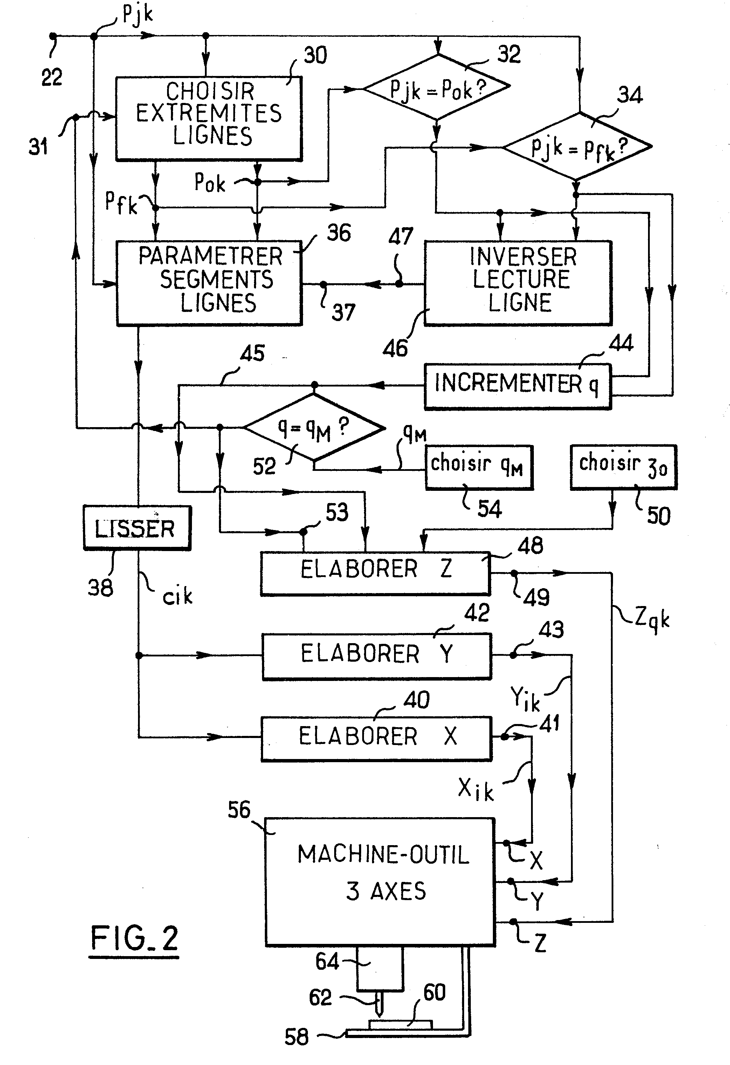

Selon la figure 2, qui représente la seconde étape du procédé de gravure selon l'invention lorsque la machine-outil est équipée de moteurs pas à pas, l'étage 30 reçoit de la sortie 22 de l'étage 20, les coordonnées des pixels pjk. Cet étage 30 "Choisir Extrémités Lignes" délivre en sortie les coordonnées xok et yok des pixels-origines pok de chacune des k lignes à graver visualisées en 24, il détermine l'ordre dans lequel elles devront être gravées et, le cas échéant, les coordonnées xjk et yfk des pixels finaux des lignes ouvertes. Les étages de test 32 et 34 ont pour fonctions respectives de répondre aux questions "pjk = pok ?" et "pjk = pfk ?".

L'étage 36 "Paramétrer Segments Lignes" comporte trois entrées principales respectivement reliées aux sorties des étages 20 et 30 fournissant pjk, pok et pfk. A partir du pixel-origine pok de coordonnées xok et yok, l'étage 36 appelle successivement les pixels courants pjk de coordonnées xjk et yjk, puis il élabore les coordonnées curvilignes cik des i segments élémentaires de la ligne de rang k correspondant au pas de déplacement élémentaire de la machine-outil. La sortie de cet étage 36 est reliée à l'entrée d'un étage intermédiaire 38 "Lisser" dont la sortie est connectée aux entrées de deux étages fonctionnels 40 "Elaborer X" et 42 "Elaborer Y". Ces deux étages produisent, sur leurs sorties respectives 41 et 43 deux suites d'impulsions de commande de déplacements horizontaux, Xik et Yik, dépendant des points-origines pok et des i couples de paramètres directeurs des segments élémentaires de chacune des k lignes à graver.

La sortie (Oui) de l'étage de test 34 "pjk = pfk ?" est reliée, d'une part, à la première entrée d'un étage fonctionnel 44 "Incrémenter q" (le nombre q étant le rang des passes de gravure) et, d'autre part, à la première entrée d'un étage fonctionnel 46 "Inverser Lecture Ligne" dont la sortie 47 est relié à l'entrée auxiliaire 37 de l'étage 36. La sortie (Oui) de l'étage de test 32 "pjk = pok ?" est reliée à la seconde entrée de l'étage 44, et à la seconde entrée de l'étage 46.

Cet étage 44 "Incrémenter q", comporte une sortie reliée à l'une des trois entrées de l'étage fonctionnel 48 "Elaborer Z", une autre entrée de cet étage 48 étant reliée à la sortie d'un étage fonctionnel 50 "Choisir zo" placé à la disposition de l'opérateur. Sur la sortie 49 l'étage 48, apparait une suite d'impulsions Zqk de commande de profondeur de gravure.

La sortie de l'étage 44 "Incrémenter q" est en outre reliée à la première entrée d'un étage de tests 52 "q = qM ?" dont la seconde entrée est reliée à la sortie d'une étage 54 "Choisir qM" placé à la disposition de l'opérateur. La sortie de l'étage de test 52 est reliée à l'entrée 31 de sélection automatique des lignes de l'étage 30 "Choisir Extrémités Lignes" et à l'entrée 53 de l'étage 48 "Elaborer Z" commandant la mise en position d'écart zo de la machine-outil. Les sorties 41-43-49 des trois étages "Elaborer X,Y,Z" sont respectivement reliées aux trois entrées X,Y,Z de l'étage de commande numérique d'une machine-outil de précision à trois axes de déplacement 56, telle que celle construite par la société italienne Cortini (modèle L 300), cette machine 56 étant équipée d'un plateau horizontal 58, adapté à être déplacé longitudinalement et transversalement. Sur ce plateau 58, est montée fixe une ébauche rectangulaire 60. La machine 56 est en outre équipée d'un outil de gravure fine à déplacement vertical, comprenant une fraise 62 et son moteur d'entraînement en rotation 64.

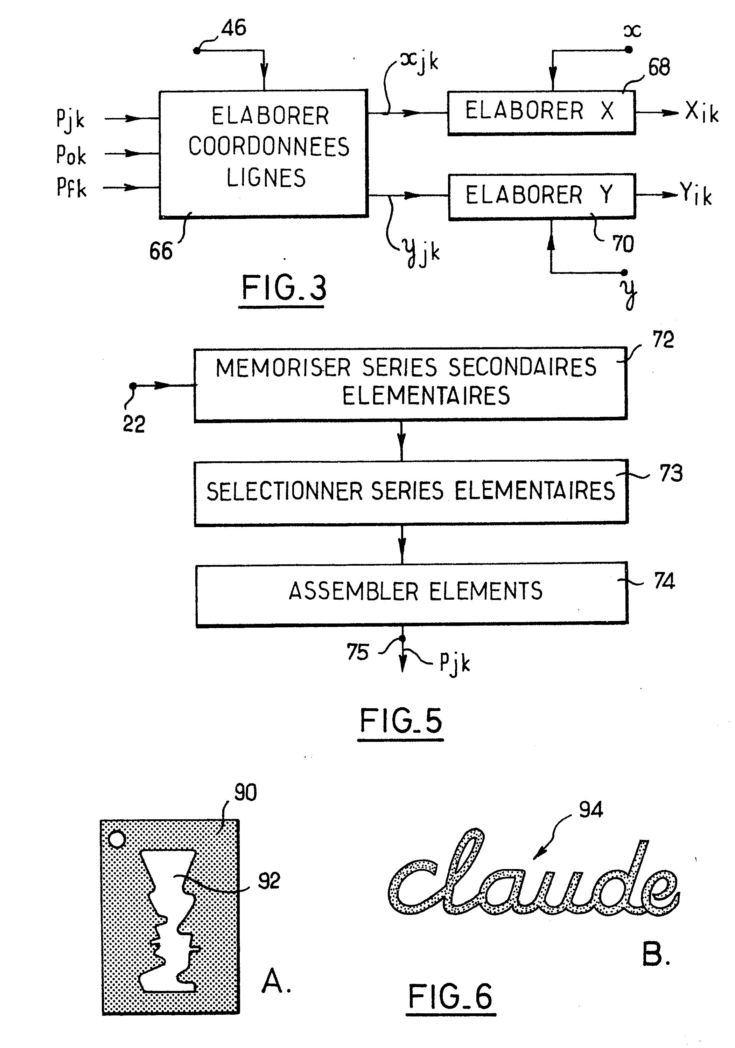

Selon la figure 3, lorsque la machine-outil est équipée de moteurs à courant continu associés à des capteurs de déplacements (optiques par exemple) la sortie 22 de l'étage 20 "Mémoriser Segments Primitifs" étant reliée à l'entrée de l'étage 30 "Choisir Extrémités Lignes", les signaux de sortie pok et pfk de l'étage 30 et ceux pjk de l'étage 20, sont appliqués à un étage 66 "Elaborer Coordonnées Lignes" qui remplace l'étage 36 "Paramétrer Segments Lignes". L'étage 66 alimente deux étages 68 et 70 "Elaborer X et Y" auxquels sont par ailleurs respectivement appliqués les signaux de sortie x et y de deux circuits de comptage-décomptage respectivement connectés aux deux capteurs solidaires des deux moteurs de commandes des déplacements horizontaux de la machine-outil 56. La sortie de l'étage 46 "Inverser Lecture Ligne" est également reliée à une entrée de l'étage 66 "Elaborer Coordonnées Lignes".

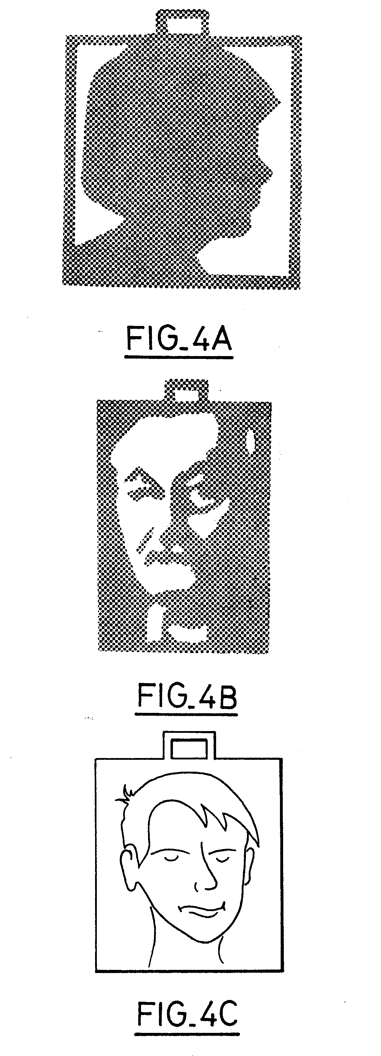

La figure 4 représente en A, B et C trois types de médailles susceptibles d'être réalisées par la mise en oeuvre du procédé de gravure automatique selon les figures 1 et 2 ou 1, 2 et 3.

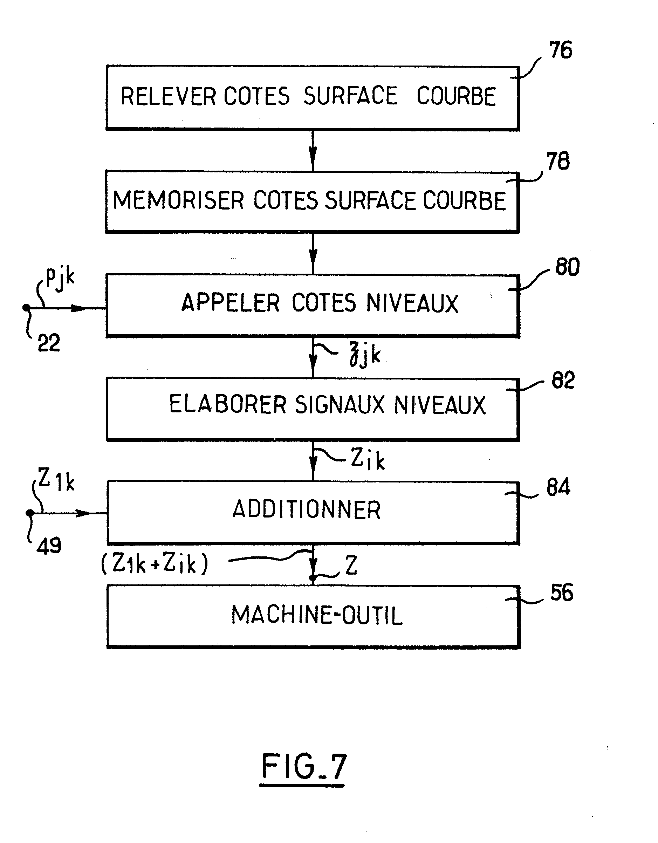

Selon la figure 5, une étape annexe du procédé selon l'invention comprend les étages fonctionnels suivants : en 72, un étage "Mémoriser Séries Secondaires Elémentaires" dont l'entrée est connectée à la sortie 22 de l'étage 20 "Mémoriser Segments Primitifs". L'étage 73 "Sélectionner Séries Elémentaires" fait suite à 72 et précède l'étage 74 "Assembler Eléments" qui fournit sur la sortie 75 les coordonnées des pixels pjk de l'assemblage d'éléments ainsi constitué.

Selon la figure 6, sont représentés en A, la médaille 90 d'un porte-clefs comportant en son milieu une fenêtre découpée 92 dont les montants sont deux profils se faisant face et en B, un mot-objet 94 ; cette médaille 90 et ce mot-objet étant découpés dans une plaque de métal noble, du laiton par exemple.

Selon la figure 7, une autre étape annexe du procédé selon l'invention comprend tout d'abord les étages fonctionnels successifs suivants : en 76 "Relever Cotes Surface Courbe", en 78 "Mémoriser Cotes Surface Courbe" et en 80, un étage "Appeler Cotes Niveaux" à deux entrées: une entrée reliée à la sortie de l'étage 78 et une autre, reliée à la sortie 22 de l'étage 20 qui fournit les coordonnées pjk des extrémités des segments primitifs des lignes à graver. A la sortie de l'étage 80 apparaissent des signaux de niveaux primitifs zjk. Ces signaux zjk sont appliqués à un étage 82 "Elaborer Signaux Niveaux" qui délivre des impulsions Zik. Ces impulsions Zik ainsi que celles Zqk de commande de profondeur de gravure provenant de 49 sont ensemble appliquées à l'entrée de l'étage 84 "Additionner" dont la sortie est reliée à l'entrée Z de la machine-outil 56.

En référence à la figure 1, on rappellera tout d'abord les deux formes de mise en oeuvre de l'étage fonctionnel 10 "Produire Séries Primaires".

La première de ces formes consiste à faire appel à un lecteur optique à balayages. Un tel lecteur comporte essentiellement, une barrette de lecture à haute résolution sous laquelle, le support de l'image à saisir, avance pas à pas. Un convertisseur analogique/numérique incorporé est associé à cette barrette.

La seconde des ces formes de mise en oeuvre de l'étage 10 consiste à saisir l'image du sujet concerné, au moyen d'une caméra-vidéo associée à un dispositif de numérisation d'image. Si l'on ne dispose pas d'une photographie du sujet, on le fera préalablement poser devant la caméra. Un magnétoscope peut à l'évidence être utilisé à titre d'intermédiaire entre la caméra-vidéo et le dispositif de numérisation d'image associé.

Dans les deux cas, les y séries primaires de signaux numériques représentatives de lignes de pixels de l'image utile successivement analysées par le matériel de saisie d'image utilisé, comportent chacune un signal-repère et un nombre donné x de signaux numériques. La valeur G (x,y) de chacun de ces signaux numériques est celle du niveau de gris du pixel de rang x dans la série primaire de rang y.

L'étage fonctionnel 12 "Mémoriser Séries Primaires" fait appel à une carte d'interface et à une mémoire, la carte étant adaptée à donner aux signaux numériques d'entrée, le format requis par la mémoire de l'ordinateur utilisé pour l'exécution des étapes fonctionnelles du procédé selon l'invention.

La fonction "Produire des séries secondaires de signaux "représentatives d'au moins une ligne distinctive de l'image du sujet, prévue par le procédé de gravure automatique selon l'invention, est exécutée par les étages 14 à 18 de la figure 1. Elle est mise en oeuvre par un ordinateur (tel un Victor V286) équipé d'un logiciel d'application adéquat. A cet effet, l'opérateur affiche tout d'abord sur l'écran de son moniteur (étage 14), l'image représentée par les séries primaires de signaux numériques stockés en 12.

Si cette image est un profil qui se détache sur un fond clair, l'opérateur choisit alors comme seuil de contraste, un niveau de gris légèrement plus foncé que le fond de l'image (étage 16) de façon à obtenir un contraste maximal. Une comparaison binaire est alors effectuée et tous les signaux numériques, de valeurs inférieures au seuil ainsi fixé, sont remplacés par un signal-pixel binaire 1 et tous ceux de valeurs supérieures à ce même seuil, remplacés par un signal-pixel binaire O (ou inversement).

Si l'angle de prise de vue de l'image est quelconque, une autre solution est possible pour l'étage fonctionnel 16 "Etablir Contrastes". Elle consistera à fixer comme seuil de contraste, un niveau de gris prédéterminé pris dans l'image utile du sujet à représenter. A nouveau, une comparaison binaire sera effectuée : les niveaux de gris les plus sombres seront seuls retenus, les valeurs des signaux numériques retenus seront remplacées par un signal-pixel binaire de valeur 1 et celles des signaux éliminés, par un O (ou inversement). L'image à représenter sera alors constituée par des zones sombres et des zones claires plus ou moins enchevêtrées. Lorsque cette image contrastée devra être utilisable comme image stylisée à découper, l'opérateur donnera des instructions à l'ordinateur pour que les zones hétérogènes (zones à découper comprenant au moins une zone à conserver) initialement obtenues soient divisées en zones homogènes à découper.

L'une ou l'autre des deux opérations précédentes étant terminée, l'ordinateur, sous le contrôle de l'opérateur, recherchera les transitions et regroupera ensemble celles qui, deux à deux, présentent une contiguïté (étage 18). A cet effet il sélectionnera toute d'abord le premier et le dernier signal 1 de chacun des groupes de signaux-pixels de contraste, compris dans chaque série primaire de signaux traitée, puis il regroupera ceux qui, deux à deux, sont contigus et forment une ligne continue. Ces signaux binaires de transition ainsi regroupés corres pondent aux pixels primitifs des lignes fermées délimitant un ou plusieurs contours distinctifs de l'image à graver. Les coordonnées xjk et yjk de ces pixels primitifs sont stockées dans une mémoire-tampon (étage 20) et visualisées en 24 pour faire apparaître les segments primitifs de chaque ligne k à graver.

Lorsque l'angle de prise de vue de l'image est quelconque, une seconde approche est également possible. Elle consistera à différentier les séries primaires de signaux représentatives des gris de l'image et à ne retenir que les signaux résultant qui dépassent un seuil prédéterminé. Pour ce faire, les signaux numériques de gris stockés en 12 seront traités en 16 en manière à ne conserver des séries primaires que les signaux-pixels présentant avec un au moins des huit signaux-pixels contigus, un écart de niveau de gris supérieur à une valeur prédéterminée. Ensuite (étage 18) les signaux ainsi sélectionnés seront transformés en signaux binaires de transition qui, à leur tour, seront regroupés par ligne continue, comme cela est indiqué plus haut. Dans ces conditions, l'étage 18 "Rechercher Transitions Contigües" produit une suite de k séries secondaires composées de signaux-pixels binaires contigus deux à deux et cette suite est représentative des coordonnées xjk et yjk des j pixels d'extrémité des segments primitifs des k lignes constituant les traits distinctifs du sujet à représenter. Pour que des lignes fermées, éventuellement constituées par certains de ces traits, puissent être gravées jusqu'à devenir des découpes, l'opérateur les segmentera en au moins deux lignes ouvertes successives.

On notera ici que les équipements utilisés pour la mise en oeuvre de la première étape du procédé de gravure automatique, selon l'invention dont les étages fonctionnels sont représentés à la figure 1, peuvent être très éloignés de ceux utilisés pour la mise en oeuvre de la seconde, représentée à la figure 2. En d'autres termes, le studio de saisie d'images pourra se trouver dans une ville et l'atelier de fabrication de l'objet concerné dans une autre. A cet effet, les donnés pjk disponibles sur la sortie 22 de la mémoire 20 seront transmises par ligne téléphonique à un équipement de réception installé dans ledit atelier, cet équipement comportant en entrée un autre étage fonctionnel 20 "Mémoriser Segments Primitifs".

Les pixels de transition pjk étant affichés en 24 sur l'écran du moniteur, l'opérateur choisit alors ou fait choisir par l'ordinateur (étage 36) ceux (pok) qui, seront pris comme origines respectives des lignes à graver. Si l'une au moins de ces ligne est ouverte, il choisira ses deux extrémités comme origine pok et comme fin pfk. Dans le cas des lignes fermées, l'origine pourra être quelconque mais de préférence ce sera pour chacune, le pixel de coordonnées minimales, ce qui permettra une automatisation aisée du choix de l'origine. Le pixel-origine pok de la ligne de rang k a pour coordonnées xok et yok, sa référence et celle des pixels courants pjk étant par exemple le coin avant gauche de l'ébauche rectangulaire 60 montée sur la machine-outil 56.

Les paires de coordonnées des signaux-pixels de transition deux à deux contigus, pjk constituant les k lignes à graver, fournies par l'étage 22, sont appelées les unes après les autres par l'étage fonctionnel 36 "Paramétrer Segments Lignes". Deux signaux de transition contigus peuvent provenir soit d'une même série primaire traitée, formée de signaux-pixels de contraste soit de deux séries successives. Dans les deux cas, l'intervalle qui les sépare correspond à la résolution longitudinale et/ou transversale primitive (quelques dixièmes de millimètre) des lignes à graver. Cette double résolution primitive est en général très différente de celle de la machine-outil 56, laquelle est le pas de déplacement élémentaire longitudinal ou transverversal que peut subir l'ébauche (au moins 100 pas au millimètre dans le cas des machines-outils de précision à utiliser). En conséquence, dans le cas où la machine-outil 56 est équipée de moteurs pas à pas, les segments primitifs réunissant deux signaux-pixels de transition adjacents pjk stockés en 20 sont tout d'abord transformés dans l'étage 36 par interpolation linéaire ou parabolique, en segments élémentaires normalisés correspondant aux déplacements horizontaux élémentaires (dx et/ou dy) de la machine-outil 56. Les extrémités de ces segments normalisés constituent les i pixels normalisés pik de coordonnées xik et yik de chaque ligne de rang k à graver. Ensuite l'étage 36 calcule les paramètres directeurs des segments élémentaires des différentes lignes. Ces paramètres directeurs sont constitités par la combinaison de vecteurs unitaires dx et dy, susceptibles de prendre chacun trois valeurs : -1, 0 et +1, les valeurs 1 correspond à un déplacement élémentaire horizontal de l'ébauche.

En conséquence, les coordonnées cartésiennes xjk et yjk des j pixels d'extrêmités des segments primitifs de chaque ligne de rang k stockées en 20, sont transformées dans l'étage 36 "Paramètrer Segments Lignes" en coordonnées curvilignes cik afférentes aux i segments normalisés de la ligne k, comptées à partir du pixel de référence puis du pixel-origine pok de chaque ligne. Ces coordonnées curvilignes cik sont, s'il en est besoin, lissées dans l'étage 38 avant d'être appliquées aux étages 40-42 "Elaborer X,Y". Les déplacements élémentaires dx et dy que représentent ces coordonnées curvilignes lissées sont respectivement aiguillés vers les étages 40 et 42 "Elaborer X et Y", qui, pour chaque ligne de rang k, fournissent en conséquence sur leurs sorties 41 et 43 deux suites d'impulsions Xik et Yik de la commande de la machine-outil 56, avec Xik = xok + dx (pik) et Yik = yok + dy (pik).

Pour élaborer puis exploiter ces données, l'opérateur procède tout d'abord à la mise en position de référence da la fraise 62 et de l'ébauche 60. A cet effet, il donne à l'ordinateur associé à la machine-outil 56, les instructions nécessaires pour que la pointe de la fraise 62 vienne effleurer le point de référence de l'ébauche 60. Ensuite l'opérateur commande l'exécution par l'ordinateur, des traitements définis dans les étages fonctionnels décrits ci-dessus puis, la réalisation par la machine-outil 56, des opérations de gravure automatique des traits distinctifs de la représentation concernée.

Dans un premier temps, la fraise 62 s'écarte de l'ébauche 60 à la distance zo, et le plateau 58 portant cette ébauche 60 se déplace depuis sa position ae départ (la fraise est alors à l'aplomb du pixel de référence, à savoir le coin avant gauche de l'ébauche pour la première ligne et, pour les suivantes, le dernier point gravé de la ligne précédente) jusqu'au point-origine pok de la ligne de rang k. Cette opération terminée, la projection de la fraise 62 sur l'ébauche 60 est le point-origine de la ligne à graver. Le deuxième temps de la gravure peut alors commencer. La fraise 62 s'abaisse et s'engage dans l'ébauche 60, comme cela sera précisé plus loin et, à partir du point d'origine (xok, yok), l'ébauche 60 se déplacera en X et Y sous l'action des moteurs pas à pas de déplacement horizontal de la machine-outil 56. Ces moteurs, alimentés par leurs étages de puissance respectifs, avancent d'un pas dans un sens ou dans l'autre, pour chaque impulsion +1 ou -1 reçue par ces étages, en suivant un à un chacun des segments élémentaires qui réunissent les pixels normalisés et lissés pik et qui ensemble constituent la ligne de rang k à graver. Les lignes ainsi gravées et les contours ainsi découpés sont, du fait du lissage avant emploi des coordonnées cik, exempts de toute aspérité ou rugosité qui en affecterait négativement l'aspect. On notera toutefois que cette opération de lissage n'est pas nécessaire, lorsque la résolution des pixels primitifs pjk des lignes à graver est relativement élevée et qu'en outre, les pixels normalisés pik de ces lignes sont produits par une interpolation parabolique entre ces pixels primitifs.

L'étage 48 "Elaborer Z" fournit en sortie une suite d'impulsions de commande de profondeur de gravure Zqk = zo + dz (q,c) pour le moteur pas à pas de déplacement vertical de la fraise 62 de la machine-outil 56. Cet étage 48 ajoute au nombre zo d'impulsions qui, à partir d'une position d'écart déterminée, amène la fraise 62 à effleurer l'ébauche 60, un nombre c d'impulsions (+1) représentatif de la profondeur d'engagement élémentaire c.dz de la fraise 62 dans l'ébauche 60 qui correspond à une passe de gravure. Le moteur 64 d'entraînement en rotation de la fraise 62 étant préalablement mis en route, le moteur pas à pas de déplacement vertical de la machine 56 reçoit un premier nombre zo puis un second nombre c d'impulsions (+1). La fraise 62 descend, vient au contact de l'ébauche 60 puis s'y enfonce d'une profondeur c.dz.

Dans le cas d'une ligne ouverte, une telle passe de gravure se poursuit aussi longtemps que l'étage 34 "pik = pfk ?" ne fournit pas une réponse Oui. Lorsque l'étage 34 fournit en sortie une telle réponse et que plusieurs passes de gravure sont prévues, une instruction est appliquée aux étages 44 "Incrémenter q" et 46 "Inverser Lecture Ligne". L'étage 44 adresse alors, (liaison 45) à l'étage 48 "Elaborer Z" une instruction d'avoir à produire une nouvelle série de c impulsions (+1) correspondant à une nouvelle profondeur d'engagement élémentaire c.dz de la fraise 62 dans l'ébauche 60. De son coté, l'étage 46 "Inverser Lecture Ligne" adresse à l'étage 36 "Paramétrer Segments Lignes" une instruction pour commander l'inversion de l'appel des coordonnées des pixels d'extrémité pjk des segments primitifs de la ligne de rang k stockées en 20.

Une nouvelle passe de gravure commence (les rôles des pixels pok et pfk étant inversés) et le cycle se renouvelle jusqu'à ce que le test 52 "q = qM ?" fournisse une réponse Oui. Le nombre maximal qM de passes de gravure fixé par l'opérateur étant alors atteint, l'étage 48 "Elaborer Z" reçoit sur son entrée 53, une commande de mise en position d'écart de la fraise 62 et l'ensemble du processus de gravure afférent à la ligne de rang k concernée est arrêté. Si ce nombre qM est suffisamment grand, une découpe est réalisée. Le processus de gravure de la ligne de rang (k + 1) commence alors immédiatement.

Dans le cas où la ligne à graver est fermée, l'étage de test 34 et l'étage 46 "Inverser Lecture Ligne" sont neutralisés et seul l'étage de test 32, "pik = pok ?" et l'étage 44 "Incrémenter q" sont actifs. L'étage 32 produit une réponse Oui lorsque la fraise 62 est revenue au point de départ et à cet instant, l'étage 44 incrémente q d'une unité : une nouvelle passe de gravure commence alors, comme dans le cas d'une ligne ouverte.

Dans le cas où la machine-outil 56 est équipée de moteurs à courant continu associés à des capteurs de déplacement, le fonctionnement de l'ensemble est quelque peu différent. Selon les figures 2 et 3, les coordonnées des pixels d'extrémités pjk (stockées en 20) des segments primitifs des différentes lignes à découper étant appliquées à l'étage 30 "Choisir Extrémités Lignes", les paires de coordonnées des pixels adjacents constituant une ligne sont successivement appelées par l'étage 66 "Elaborer Coordonnées Lignes". A partir des coordonnées xok et yok produites en 30 et de celles xjk et yjk du pixel courant pjk, successivement appelées par l'étage 66, cet étage élabore les différences de coordonnées existant entre les extrémités aval et amont de chacun des segments primitifs de la ligne de rang k à graver.

Dans un premier temps, la fraise 62 étant en position d'écart par rapport à l'ébauche 60, celle-ci se déplace depuis son point de référence jusqu'à ce que le point-origine pok de la ligne de rang k soit disposé à l'aplomb de la fraise 62. Ces déplacements sont pilotés par les étages 68 et 70 qui élaborent les signaux de commande de déplacements élémentaires Xik et Yik, à partir de la différence entre les signaux d'entrée initiaux xok et yok, d'une part, et les nombres x et y résultant du comptage et décomptage des impulsions de déplacements avant et arrière produites par les capteurs de déplacements longitudinaux et transversaux liés au plateau 58, d'autre part.

Cette position initale étant prise, la fraise 62 s'abaisse comme indiqué plus haut et la position instantanée de l'ébauche 60 est alors asservie à suivre le tracé de la ligne à réaliser (commandes en boucles fermées). De la sorte, au rythme des impulsions de courant positives ou négatives, calibrées en amplitude et en durée, appliquées aux moteurs par leurs étages de puissance respectifs, la première passe de gravure de la première ligne à graver se réalise par déplacements élémentaires dx et dy comme dans le cas des machines-outils équipées de moteurs pas à pas. Dans le cas présent, plusieurs de ces déplacements élémentaires prennent généralement place entre deux signaux-pixels primitifs pjk consécutifs, la période d'appel par l'étage 66 des coordonnées successives xjk et yjk des pixels contigus concernés, étant un multiple entier de la période des impulsions de commande des moteurs. Les autres phases de l'opération étant définies quel que soit le type de moteurs montés dans la machine-outil, ces autres phases ne seront pas décrites à nouveau.

Après cette description des caractéristiques principales des étapes de mise en oeuvre du procédé de gravure automatique selon l'invention, on notera la simplicité relative des tâches que doit exécuter l'opérateur et des instructions qu'il doit donner à l'ordinateur. On notera également que les talents éventuels de dessinateur d'art de l'opérateur ne sont aucunement sollicités pour la réalisation sur-le-champ, à partir d'une ébauche plane, d'un petit objet d'ornement ou d'usage comportant la représentation fidèle des traits distinctifs de tout sujet proposé par un client : un profil (fig. 4A), des contrastes (fig. 4B) et des lignes distinctives (fig. 4C).

Selon la figure 5, une première étape annexe du procédé selon l'invention permet de graver des assemblages d'éléments pris dans un ou plusieurs ensembles déterminés. Ces éléments seront des lettres, des signes, des symboles ou même des profils de personnes particulières.

A cet effet, les fonctions des étages 10 à 18 de la première étape du procédé selon la figure 1, sont tout d'abord appliquées à chacun des éléments de l'ensemble concerné. Puis les séries secondaires élémentaires ainsi produites sont mémorisées (étage 72) et, à la demande, sélectionnées (étage 73) et assemblées (étage 74). Les séries secondaires combinées pjk qui apparaissent sur la sortie 75 de l'étage 74, sont représentatives des contours de l'assemblage d'éléments commandés par le client.

A titre de premier exemple, l'ensemble d'éléments concernés est formé par les deux profils d'un couple de jeunes mariés et l'objet concerné est la médaille 90 du porte-clefs souvenir, représentée en 6A (une plaquette dans laquelle une fenêtre 92 bordée par ces profils a été découpée), qui sera distribué aux invités au mariage.

A titre de second exemple, l'ensemble d'éléments concernés est constitué par des lettres majuscules et minuscules originales, des points et des barrettes de liaison. Cette technique permet de réaliser des mots-objets découpés dans une plaquette de métal, noble, du laiton par exemple, tels celui représenté à la figure 6B. Ce mot sera, par exemple, le nom de l'occupant d'un bureau, le nom d'un magasin, ou le prénom d'une personne. Cet objet pourra être fixé, notamment par collage, sur la porte d'entrée de ce bureau ou de ce magasin, ou sur un socle de bois précieux pour en faire un presse-papier. Il pourra également, dans le cas d'un prénom, constituer l'élément central d'un bracelet ou d'un collier lorsque du métal précieux est utilisé.

Selon la figure 7, une seconde étape annexe du procédé selon l'invention permet de graver à la demande des surfaces courbes telles des manches bombés d'ustensiles de table (cuillères, fourchettes, couteaux) dans des conditions économiques intéressantes. A cet effet le premier étage fonctionnel (76) de cette seconde étape annexe, consiste à relever les cotes de la surface courbe des ébauches à graver. Pour ce faire, une ébauche-modèle en métal conducteur de l'électricité, sera montée fixe sur un support isolant et celui-ci, à sont tour sera monté fixe sur le plateau 58 de la machine-outil 56. L'ébauche 60 ainsi montée sera portée à un potentiel électrique donné à travers une impédance élevée. La fraise 62 est remplacée par une pointe de contact, mise au potentiel de la masse comme le bâti de la machine 56. A partir d'un point de référence donné pris sur l'ébauche-modèle, celle-ci subit des petits déplacements horizontaux successifs, de manière à réaliser un carroyage serré de la surface courbe concernée, avec un pas de quelques dixièmes de millimètre, par exemple. A chaque arrêt de l'ébauche, la pointe de contact descend depuis un point de référence donné jusqu'à venir établir un contact électrique avec l'ébauche. Un signal électrique est produit à cet instant qui provoque à la fois l'inversion du mouvement de la pointe, le relevé et la mise en mémoire (étage 78) des cotes tri-dimensionnelles du point de l'ébauche concerné et l'avancement d'un nouveau pas de carroyage, pointe de contact en position de référence.

Le pas des cotes ainsi relevées et mémorisées correspond à priori à la résolution des coordonnées d'extrêmité pjk des segments primitifs des lignes à graver. S'il n'en est pas ainsi, ces cotes sont préalablement rendues compatibles avec cette résolution avant d'être mémorisées, de façon à pouvoir être utilisées sans difficulté, à l'occasion de toute opération de gravure d'une ébauche bombée d'un modèle donné.

Dans l'étage 80 "Appeler Cotes Niveaux", les cotes de niveaux primitifs de la surface gauche de l'ébauche à graver, mémorisés en 78 sont appelées en fonction de la suite des coordonnées dans le plan horizontal des j pixels d'extrêmité pjk des segments primitifs (mémorisées en 20) qui constituent chacune des k lignes de l'images à graver. Sur la sortie de l'étage 80, apparaissent des suites continues de signaux de niveaux primitifs zjk. Dans l'étage 82 "Elaborer Signaux Niveaux", ces signaux zjk sont transformés, par interpolation linéaire ou parabolique, en signaux de commande complémentaire de niveaux Zik correspondant à chacune des coordonnées curvilignes cik des i segments élémentaires de chaque ligne de rang k à graver. Ces signaux Zik sont des signaux de commande de déplacements relatifs verticaux élémentaires de la fraise 62 et du plateau 58 qui, en même temps que les signaux de profondeur de gravure Z1k (dans ce cas, q = 1) produits par l'étage 48 "Elaborer Z" sont appliqués à l'étage 84 où ils sont additionnés pour constituer des signaux combinés (Z1k + Zik) de commande de descente de la fraise 62. Dans ces conditions, pendant la gravure d'une ligne, la fraise 62 est à tout moment, engagée dans l'ébauche 60 d'une profondeur c.dz, quel que soit le niveau de l'extrêmité pik des segments normalisés successifs de la ligne de rang k à graver sur la surface courbe de l'ébauche.

De ceci il résulte, que si l'ébauche concernée est par exemple le manche d'une cuillère ou d'une fourchette en métal argenté, avec une épaisseur d'argent de 80 microns et une différence de niveaux entre la partie centrale et la périphérie de la zone à graver de l'ordre du millimètre, il devient possible, avec le procédé de gravure perfectionné selon l'invention, mis en oeuvre par une machine-outil de précision dont les pas de déplacement élémentaire est inférieur à dix microns, de réaliser, à peu de frais, par une passe de gravure unique, des traits de 40 microns de profondeur dans l'épaisseur de l'argent, sans jamais risquer de traverser cette épaisseur. Ce qui, jusqu'à présent, n'a pu être réalisé, qu'à des coûts élevés, notamment au moyen de pantographes traditionnels et grâce à l'habileté exceptionnelle des ouvriers graveurs employés à ce travail.

L'invention n'est pas limitée aux formes de mise en oeuvre du procédé de gravure automatique décrit ci-dessus.

On notera tout d'abord que les exemple décrits concernent les techniques de base de gravure automatique de petits objets d'ornement ou d'usage, comportant la représentation fidèle des traits distinctifs d'un sujet déterminé : les contours extérieurs, les zones de contraste et les lignes distinctives. Il est bien entendu possible dans le cadre de l'invention de les combiner ou de les compléter. Par exemple, de graver ou découper un profil ou un contour et d'y graver soit des traits parallèles de largeur déterminée pour le distinguer d'un autre ayant un autre ton soit les lignes distinctives du sujet.

On notera que, dans une variante des procédés selon l'invention, les coordonnées curvilignes lissées cik produites par l'étage fonctionnel 38 peuvent être mises en mémoire avant d'être appliquées aux étages 40 et 42 "Elaborer X, Y". Dans ce cas la période d'appel de ces coordonnées est déterminée par les étages 40-42, en fonction des caractéristiques des moteurs pas à pas de la machine-outil 56, l'ordre dans lequel sont appellés de ces coordonnées étant déterminé par le signal de sortie de l'étage 46 "Inverser Lecture Ligne". Cet étage 46 de même que l'étage 44 "Incrémenter q" ne sont plus alimentés par les sorties des étages de test 32 et 34 mais par celles d'étages équivalents connectés à la mémoire des coordonnées cik, ces étages équivalents ayant pour fonction de repérer le début ou la fin d'une suite de coordonnées curvilignes cik appelées par les étages 40-42. En utilisant une mémoire de coordonnées curvilignes cik, on sépare dans le temps l'opération de gravure et celle de production des données de gravure. Ce qui permet de diminuer la puissance de l'ordinateur utilisé et, en outre de faire appel pour chaque opération, à une catégorie de personnel spécialisé, lorsque les objets concernés doivent être produits en quantité relativement importante.

Dans le cas d'objets à une surface courbe, les signaux de niveaux primitifs fournis par l'étage 80 sont transformés par interpolation en signaux de niveaux élémentaires zik avant d'être appliqués à la mémoire des coordonnées cik. Les signaux zik sont appelés en même temps que cik par les étages 40-42 et ils sont appliqués à l'étage 82 qui les transforment en impulsions de commande de niveaux Zik.

Pour réaliser ces objets, la machine-outil 56 comporte une tourelle équipée d'au moins deux outils à gravure : un outil de gravure fine constitué, par exemple, par une fraise à tête conique étroite, de diamètre au plus égal à 0,5 mm, pour la gravure des lignes distinctives de l'objet et un outil de gravure rapide, constitué par une fraise sensiblement cylindrique, de diamètre au moins égal à un millimètre, pour la découpe des bords extérieurs de l'objet. Les changements de ces différents outils seront bien entendu commandés automatiquement, en fonction des instructions préalables de l'opérateur.

On notera encore que si l'invention concerne tout d'abord des procédés de gravure automatique, elle concerne également le système à utiliser pour leur mise en oeuvre et les objets d'ornement et d'usage fabriqués selon ces procédés.

**Revendications**

1. Procédé de gravure automatique d'objets devant comporter la représentation fidèle des traits distinctifs d'un sujet déterminé, du genre dans lequel, l'image du sujet concerné étant analysée par balayages, des séries primaires de signaux numériques, représentatives des niveaux de gris des lignes de pixels de l'image analysée, sont produites (10) et mémorisées (12) puis traitées (14 à 2O) de façon à produire des séries secondaires de signaux représentatives de la gravure à réaliser, lesdites suites secondaires étant ensuite traitées à leur tour (30 à 54) de façon à produire des suites de signaux numériques de commande de déplacements relatifs d'une ébauche (60) et d'un outil de gravure (62) montés sur une machine-outil (56) à commande numérique, du type à trois axes de déplacements (X, Y, Z), caractérisé en ce que lesdites séries secondaires sont formées de signaux binaires correspondant à des transitions particulières (18) des niveaux de gris desdites séries primaires, deux signaux binaires contigus définissant un segment primitif d'une ligne à graver (20) et en ce que ledit outil (62) étant adapté à graver de traits fins, lesdites suites de signaux de commande de déplacements comprennent, d'une part, des doubles suites continues (Xik et Yik) d'impulsions de commande de déplacements horizontaux élémentaires, chacune de ces doubles suites continues correspondant à la succession des segments primitifs d'une ligne distinctive de rang k à graver (30-32-34-36-40-42-46) et, d'autre part, une suite discontinue (Zqk) d'impulsions de commande de déplacements verticaux élémentaires déterminant la profondeur de gravure.

2. Procédé de gravure automatique selon la revendication 1, caractérisé en ce que les traits distinctifs du sujet étant constitués par un profil se détachant sur un fond clair, la production desdites séries secondaires comprend : la comparaison binaire des signaux desdites séries primaires avec un seuil constitué par un niveau de gris légèrement plus sombre que ledit fond clair (16), suivi de la sélection des signaux de transition des séries primaires ainsi traitées et le regroupement (18) des signaux de transition contigus deux à deux, pour former les séries secondaires respectivement afférentes aux lignes continues à graver.

3. Procédé de gravure automatique selon la revendication 1, caractérisé en ce que les traits distinctifs du sujet étant constitués par les contours des principales zones de contraste de l'image du sujet, la production desdites séries secondaires comprend : la comparaison binaire des signaux desdites séries primaires avec un seuil constitué par un niveau de gris relativement élevé prédéterminé pris dans lesdites séries primaires (16), la sélection des signaux de transition des séries primaires ainsi traitées et le regroupement (18) des signaux de transition contigus deux à deux, pour former les séries secondaires respectivement afférentes aux lignes continues à graver.

4. Procédé de gravure automatique selon la revendication 1, caractérisé en ce que les traits distinctifs du sujet étant constitués par les lignes distinctives de l'image du sujet, la production desdites séries secondaires comprend : la sélection des signaux des séries primaires présentant avec au moins un de leurs huit signaux contigus, un écart de niveau de gris supérieur à une valeur prédéterminée, la conversion des signaux ainsi sélectionnés en signaux binaires de transition (16) et le regroupement (18) des signaux de transition contigus deux à deux, pour former les séries secondaires respectivement afférentes aux lignes continues à graver.

5. Procédé de gravure automatique selon la revendication 1, caractérisé en ce que ladite machine-outil (56) étant équipée de moteurs pas à pas, les coordonnées cartésiennes des pixels d'extrémité des segments primitifs de chaque lignes distinctive à graver sont, après avoir préalablement été mises en mémoire, successivement appelées, interpolées et traitées afin de produire les coordonnées curvilignes (cik) des segments normalisés de ligne, correspondant au pas de déplacement horizontal élémentaire de la machine-outil (56), lesdites coordonnées curvilignes (cik), après avoir, le cas échéant, été lissées (38) et/ou mises en mémoire, étant ensuite utilisées pour élaborer (40-42) lesdites suites continues de d'impulsions de commande (Xik et Yik) des moteurs de déplacement horizontaux de ladite machine (56).

6. Procédé de gravure automatique selon la revendication 1, caractérisé en ce que la machine-outil (56) étant équipée de moteurs à courant continu associés à des capteurs de déplacement, les coordonnées cartésiennes des pixels d'extrémité des segments primitifs de chaque ligne distinctive à graver sont, après avoir préalablement été mises en mémoire, successivement appelées et comparées aux coordonnées fournies par lesdits capteurs, de manière à produire des signaux d'erreur de position servant à élaborer lesdites suites d'impulsions de commande (Xik et Yik) des moteurs de déplacements horizontaux de ladite machine (56).

7. Procédé de gravure automatique selon l'une des revendications 5 et 6, caractérisé en ce que les trois suites d'impulsions de commande (Xik, Yik, Zqk) sont renouvelées en vue d'une nouvelle passe de gravure de rang q, à chaque fois qu'est appelé le pixel-origine ou le pixel de fin d'une ligne, la succession des appels des pixels d'extrémité des segments de lignes (46) étant alternativement inversée lorsque ladite ligne est ouverte.

8. Procédéde gravure automatique selon la revendication 2, caractérisé en ce que ladite représentation étant constitué par un assemblage d'éléments figuratifs choisis dans un ensemble donné, des séries secondaires élémentaires représentatives de chacun des contours des éléments dudit ensemble sont produites et mémorisées (72) puis sélectionnées (73) et assemblées (74) à la demande, de manière à constituer des séries secondaires combinées, représentatives des contours présentés par ledit assemblage d'éléments figuratifs choisis.

9. Procédé de gravure automatique selon la revendication 1, caractérisé en ce que l'ébauche (60) présentant une surface courbe, des séries complémentaires de signaux, représentatives des coordonnées tridimensionnelles de points de ladite surface courbe, sont produites (76) en accord avec la résolution des segments primitifs des lignes à graver puis mémorisées (78) et en ce que les données de niveaux desdites séries complémentaires sont ensuite appelées (80) en accord avec la succession des signaux de la série secondaire afférente à la ligne à graver, puis interpolées et traitées de manière à produire (82) des suites continues, le cas échéant renouvelées, d'impulsions de commande de niveaux (Zik) destinées à être ajoutées (86) à la suite discontinue d'impulsions de commande de profondeur de gravure (Zqk) pour constituer les impulsions de commande des déplacements verticaux relatifs combinés de l'outil de gravure (62) et de l'ébauche (60) à surface courbe.

10. Système de gravure automatique d'objets devant comporter la représentation fidèle des traits distinctifs d'un sujet déterminé, du genre comprenant une machine-outil de précision (56) à commande numérique, du type à trois axes de déplacements, des moyens (10) pour analyser par balayages l'image du sujet concerné et pour produire des séries primaires de signaux numériques représentatives des niveaux de gris des lignes de pixels de l'image analysée et un ordinateur programmé incluant des moyens (12) pour mémoriser ces séries primaires, des moyens (14 à 18) pour traiter ces séries primaires afin de produire des séries secondaires de signaux représentatives de la gravure à réaliser et des moyens (30 à 54) pour traiter ces séries secondaires de façon à produire des suites de signaux numériques de commande des déplacements relatifs d'une ébauche (60) et d'un outil de gravure (62) montés sur ladite machine-outil (56), caractérisé en ce que ledit outil (62) étant adapté à graver des traits fins, lesdits moyens pour produire lesdites séries secondaires comprennent des moyens (16) pour sélectionner des transitions particulières des niveaux de gris desdites séries primaires, des moyens (18) pour convertir ces transitions en signaux binaires et pour regrouper deux à deux ceux de ces signaux qui sont contigus, de façon à constituer une pluralité de séries secondaires de signaux représentatives des pixels d'extrémité des segments primitifs de la pluralité des lignes continues à graver, des moyens (20) pour mémoriser les coordonnées des signaux-pixels primitifs ainsi produits, des moyens (36) pour successivement appeler les coordonnées des signaux-pixels primitifs d'une ligne et pour les transformer par interpolation en coordonnées des segments normalisés de ladite ligne, en accord avec le pas de déplacement élémentaire de la machine-outil (56), des moyens (40-42) pour transformer ces dernières coordonnées en deux suites continues (Xik et Yik) d'impulsions de commande des déplacements relatifs horizontaux élémentaires de l'outil (62) et de l'ébauche (60), des moyens (44-52-54) pour produire des signaux représentatifs de la profondeur de gravure, des moyens (48) pour transformer ces signaux de profondeur de gravure en une suite discontinue (Zqk) d'impulsions de commande des déplacements relatifs verticaux élémentaires de l'outil (62) et de l'ébauche (60) et des moyens (30) pour déterminer les pixels de départ de chaque ligne à graver.

0273826

PRODUIRE SERIES PRIMAIRES — 10

MEMORISER SERIES PRIMAIRES — 12

VISUALISER IMAGE SUJET — 14

ETABLIR CONTRASTES — 16

RECHERCHER TRANSITIONS CONTIGÜES — 18

MEMORISER SEGMENTS PRIMITIFS — 20

22 — pjk

VISUALISER SEGMENTS PRIMITIFS — 24

FIG_1

0273826

FIG. 2

0273826

P_jk →
P_ok →
P_fk →

ELABORER
COORDONNEES
LIGNES

46

66

$x_{jk}$

$y_{jk}$

$x$

ELABORER X → $X_{ik}$

68

ELABORER Y → $Y_{ik}$

70

$y$

FIG.3

MEMORISER SERIES SECONDAIRES
ELEMENTAIRES

72

22

SELECTIONNER SERIES ELEMENTAIRES

73

ASSEMBLER ELEMENTS

74

75

$P_{jk}$

FIG.5

90

92

A.

94

claude

B.

FIG.6

0273826

FIG. 4A

FIG. 4B

FIG. 4C

RELEVER COTES SURFACE COURBE — 76

MEMORISER COTES SURFACE COURBE — 78

$P_{jk}$ · 22

APPELER COTES NIVEAUX — 80

$\xi_{jk}$

ELABORER SIGNAUX NIVEAUX — 82

$Z_{ik}$

$Z_{1k}$ · 49

ADDITIONNER — 84

$(Z_{1k}+Z_{ik})$   $Z$

MACHINE-OUTIL — 56

**FIG_7**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-4 385 360 (MICRO-POWER COMPUTER SYSTEMS) <br> * Colonnes 2,3; colonne 7, ligne 55 - colonne 8, ligne 2; figure 1 * | 1,8,10 | G 05 B 19/42 |
| Y <br> A | | 2 <br> 3-7,9 | |
| | --- | | |
| Y | EP-A-0 177 041 (KABUSHIKI GAISHA WAIZEN) <br> * Page 2; figures 1,5 * | 2 | |
| | ----- | | |

**DOMAINES TECHNIQUES RECHERCHES (Int. Cl.4)**

G 05 B

**Le présent rapport a été établi pour toutes les revendications**

| Lieu de la recherche | Date d'achèvement de la recherche | Examinateur |
|---|---|---|
| LA HAYE | 26-02-1988 | MOYLE J.F. |